# EUROPEAN PATENT APPLICATION

(11) **EP 1 329 567 A1**
(43) Date of publication of application: **23.07.2003**
(21) Application number: 02290041.9
(22) Date of filing: 09.01.2002
(51) Int. Cl.: E04C 2/36, E04F 13/08, B32B 3/12, B29D 24/00

(54) **Semi sandwich panel**

(71) Applicant: Hankuk Fiber Glass Co., Ltd., Miryang-Si, Kyungnam 627-850 (KR)
(72) Inventor: Cho, Yong-Jun, Miryang-Si, Kyungnam 627-850 (KR); Cho, Se-Hyun, Miryang-Si, Kyungnam 627-110 (KR)
(74) Representative: Bloch, Gérard

(57) **Abstract**

The present invention relates to a semi sandwich panel (10) in which a core material (14) is partially formed in a portion which needs a strength and intensity between two surface finishing materials (12) formed of a textile for thereby implementing a certain strength and intensity of a sandwich panel, so that it is possible to obtain strength and intensity as a structure member which is a feature of a sandwich panel, and the number of fabrication processes is decreased, and the fabrication cost is decreased.

## Description

### BACKGROUND OF THE INVENTION

### 1. Field of the Invention

The present invention relates to a sandwich panel used as an interior finishing material for a train and ship, and in particular to a semi sandwich panel which has a certain lightness and strength and is fabricated at a lower cost.

### 2. Description of the Background Art

Generally, an interior finishing material which is used for a train and ship formed of a metallic material, is fabricated at a lower cost. A complicated product may be fabricated using the above material. In this case, it is easier to maintain the train and ship. However, the train and ship having an interior formed of a metallic interior finishing material is easily rotten. So, the life span is short. The total weight of the train or ship is increased due to the metallic interior finishing material. Therefore, in order to overcome the above problems, a surface finishing material and core material formed of a textile are overlapped and bonded using an adhesive for thereby fabricating a sandwich panel which is used as an interior finishing material in the train and ship.

The above sandwich panel is lighter than a metallic panel and has a better strength with respect to its weight and a better durability.

However, since a core material filled between the surface finishing materials is fully used or included in all over the surface finishing material, the number of the fabrication processes is increased, and the fabrication cost is significantly increased.

### SUMMARY OF THE INVENTION

Accordingly, it is an object of the present invention to provide a semi sandwich panel which overcomes the problems encountered in the conventional art.

It is another object of the present invention to provide a semi sandwich panel which is capable of partially forming a core material filled between both surface finishing materials formed of a textile in a portion which needs an increased strength and intensity of a sandwich panel for thereby implementing a certain structural strength and intensity of a sandwich panel, simplifying the number of fabrication processes and decreasing the fabrication cost.

In order to achieve the above objects, there is provided a semi sandwich panel in which a core material is inserted into a portion which needs a strength and intensity between both surface finishing materials formed of a textile.

The surface finishing material is formed of more than one material selected from the group formed of a glass fiber, a carbon fiber, a synthetic fiber,
and an aramid fiber.

The core material is formed of more than one material selected from the group formed of an aluminum honeycomb, a nomex honeycomb, a paper honeycomb, a urethane foam, and an acrylic foam.

The insert nut is installed in the core material formed between both surface finishing materials for implementing a mounting structure.

### BRIEF DESCRIPTION OF THE DRAWINGS

The present invention will become better understood with reference to the accompanying drawings which are given only by way of illustration and thus are not limitative of the present invention, wherein;
Figure 1 is a perspective view illustrating a semi sandwich panel according to a first embodiment of the present invention;
Figure 2 is a cross-sectional view taken along line A-A of Figure. 1;
Figure 3 is a cross-sectional view illustrating a mounting structure of a semi sandwich panel of Figure 1;
Figure 4 is a perspective view illustrating a semi sandwich panel according to a second embodiment of the present invention;
Figure 5 is a cross-sectional view taken along line B-B line of Figure 4; and
Figure 6 is a cross-sectional view of Figure 4.

### DETAILED DESCRIPTION OF THE PREFERRED EMBODIMENTS

The preferred embodiments of the present invention will be explained with reference to the accompanying drawings.

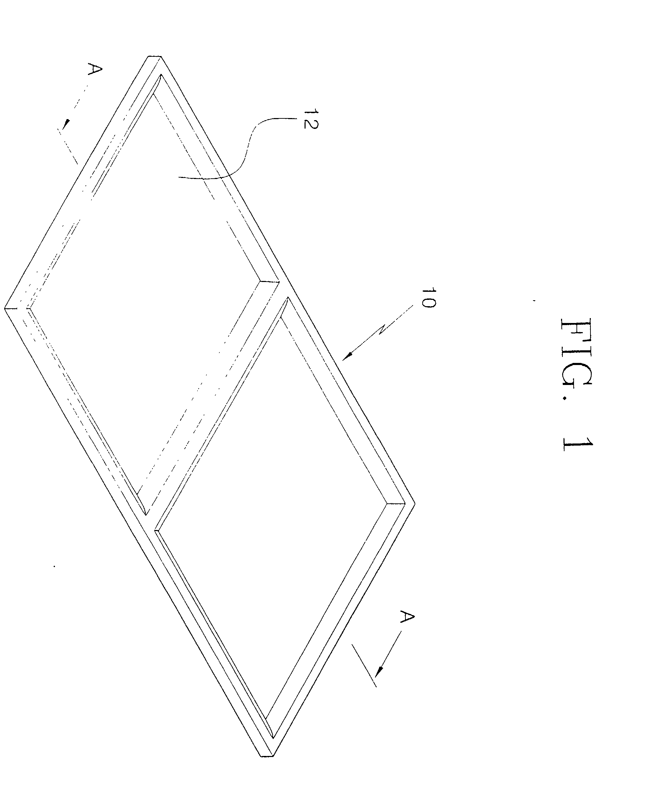

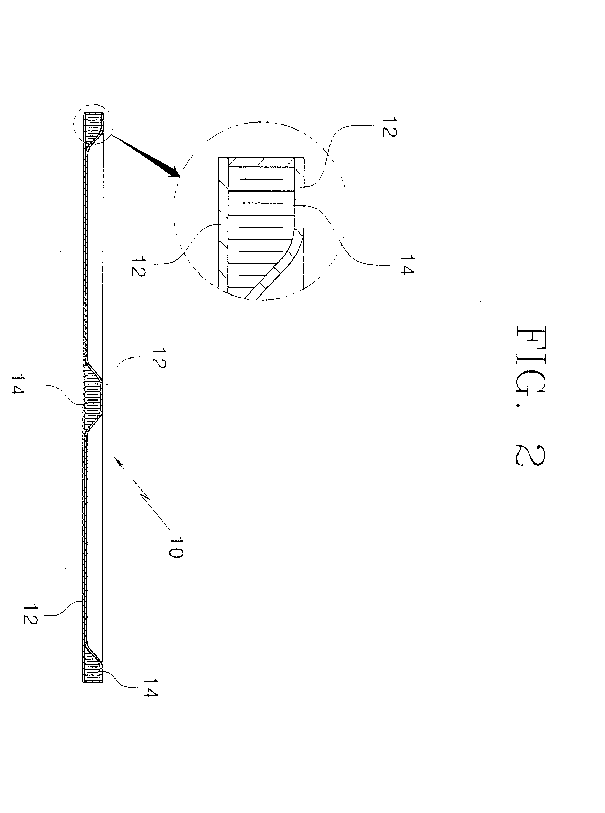

Figures 1 through 3 are views illustrating a semi sandwich panel which is used as an interior finishing material for a train according to a first embodiment of the present invention.

As shown therein, a core material 14 is formed into a portion which needs a certain strength and intensity between both surface finishing materials 12 formed of a textile for thereby forming a semi sandwich panel 10.

As an example of the textile surface finishing material 12, a glass fiber is impregnanted into a phenol or epoxy resin for thereby producing a prepreg. The prepreg is disposed on a mold or a molding base. Thereafter, a core material 14 is partially inserted into an edge portion of the inner surface of the surface finishing material 12 and in a rib shape across the edge portions based on a known method for implementing a certain strength and intensity and is molded at a high temperature or is fabricated based on a hand lay up method at a room temperature and is hardened for thereby fabricating a semi sandwich panel 10.

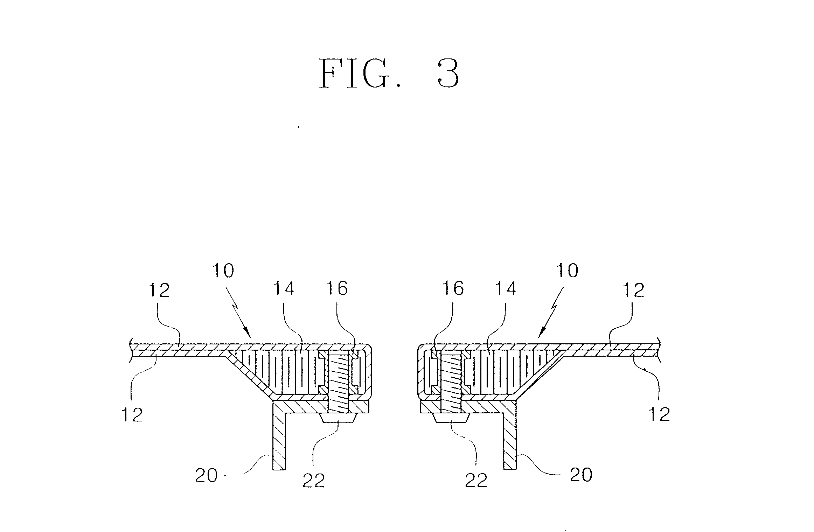

As shown in Figure 3, in the semi sandwich panel 10, a certain number of insert nuts 16 are installed in the interior of the core material 14 for mounting in the structure of a train. A connection bracket 20 is fixed to the insert nut 16. In addition, the connection bracket 20 is installed in the semi sandwich panel 10, so the semi sandwich panel 10 is mounted on the structure of the train.

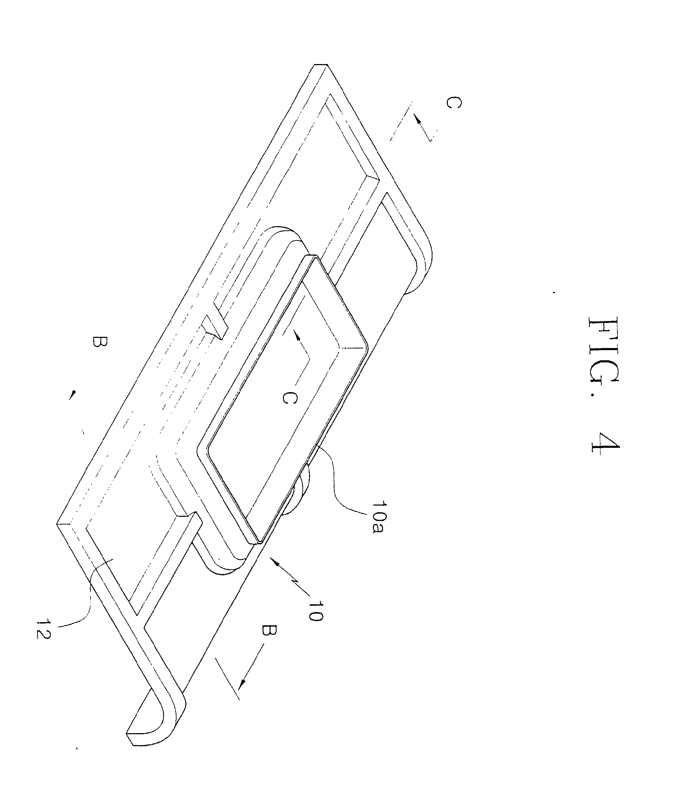

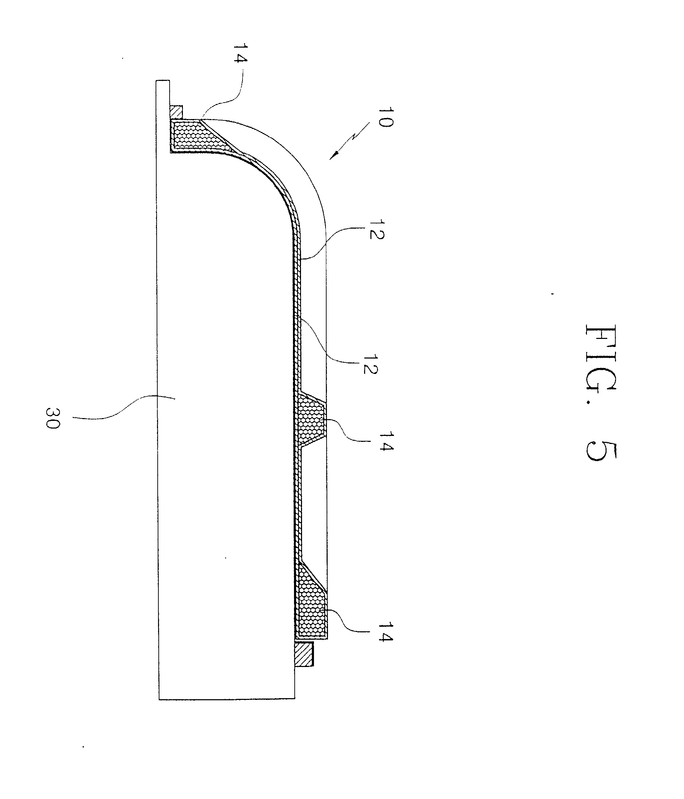

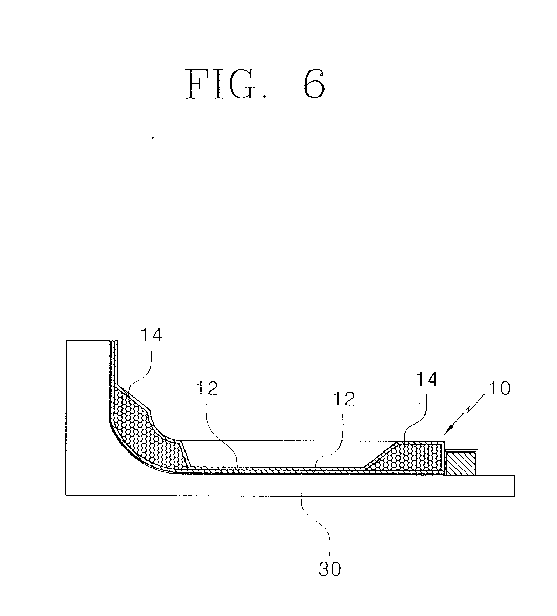

Figures 4 through 6 are views illustrating a semi sandwich panel for an interior finishing material of a train according to a second embodiment of the present invention and illustrating a semi sandwich panel in which a window frame is integrally formed.

As an example of the textile surface finishing material 12, a glass fiber is impregnanted into a phenol or epoxy resin for thereby producing a prepreg. The prepreg is disposed on a mold or a molding base. Thereafter, a core material 14 is partially inserted into an edge portion of the inner surface of the surface finishing material 12 and a circumference of the window frame 10a in a rib shape based on a known method for implementing a certain strength and intensity and is molded at a high temperature or is fabricated based on a hand lay up method at a room temperature and is hardened for thereby fabricating a semi sandwich panel 10.

The insert nut is installed in the core material 14 in the same manner as the first embodiment of the present invention.

In the first and second embodiments of the present invention, the textile surface finishing material 1 is formed of more than one material selected from the group formed of a glass fiber, a carbon fiber, a synthetic fiber, an aramid fiber.

In addition, in the first and second embodiments of the present invention, the core material 14 is formed of more than one material selected from the group formed of an aluminum honeycomb, a nomex honeycomb, a paper honeycomb, a urethane foam, and an acrylic foam.

In the first and second embodiments of the present invention, the core material 14 which is partially filled between both surface finishing materials 12, namely, is filled into a portion which receives a stress and needs a certain strength and intensity. The core material 14 is partially inserted between both surface finishing materials 12 in various shapes based on the shape and purpose of the interior finishing material.

As described above, in the semi sandwich panel according to the present invention, the core material which forms a structure of the sandwich is partially formed in an edge portion of the panel which needs a strength and intensity between both surface finishing materials and in a rib shape across the edge portions or in the case of the window frame, the core material is formed in an edge portion of the panel and the circumference of the window frame in a rib shape for thereby decreasing the use of the core material compared to the conventional sandwich panel, implementing a desired strength, intensity and durability and decreasing the fabrication cost. In addition, in the present invention, it is possible to fabricate the product based on a smaller number of the fabrication processes compared to the conventional fabrication method.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A semi sandwich panel in which a core material is inserted into a portion which needs a strength and intensity between both surface finishing materials formed of a textile.

2. The panel of claim 1, wherein said surface finishing material is formed of more than one material selected from the group formed of a glass fiber, a carbon fiber, a synthetic fiber, and an aramid fiber.

3. The panel of claim 1, wherein said core material is formed of more than one material selected from the group formed of an aluminum honeycomb, a nomex honeycomb, a paper honeycomb, a urethane foam, and an acrylic foam.

4. The panel of claim 1, wherein an insert nut is installed in the core material formed between both surface finishing materials for implementing a mounting structure.

5. The panel of claim 1, wherein said core material is formed in an edge portion of the inner surface of the surface finishing material and is partially formed across the edge portion of the same.

6. The panel of claim 1, wherein said core material is formed in an edge portion of the inner surface of the surface finishing material and is partially formed in a circumference of a window frame.

7. The panel of claim 1, wherein said semi sandwich panel is adapted to an interior finishing material of a train or a ship.
